# EUROPÄISCHE PATENTANMELDUNG

(11) **EP 4 843 378 A1**
(43) Veröffentlichungstag der Anmeldung: **25.11.2026**
(21) Anmeldenummer: 26177292.5
(22) Anmeldetag: 07.05.2026
(51) Int. Cl.: A01D 78/10, A01D 80/02

(54) **VERFAHREN ZUR EINSTELLUNG DER STREUWINKEL VON KREISELRECHEN EINES KREISELZETTWENDERS SOWIE EIN KREISELZETTWENDER**

(30) Priorität: 22.05.2025 DE 102025120121
(71) Anmelder: Maschinenfabrik Bernard Krone GmbH & Co. KG, 48480 Spelle (DE)
(72) Erfinder: Afting, Andreas, 48488 Emsbüren (DE); Weber, Mathias, 49124 Georgsmarienhütte (DE)

(57) **Zusammenfassung**

Die vorliegende Erfindung bezieht sich auf ein Verfahren zur Einstellung der Streuwinkel (S) von mehreren an einem Maschinenrahmen (10) gehaltenen umlaufend angetriebenen Kreiselrechen (12) eines Kreiselzettwenders (2) sowie auf einen Kreiselzettwender (2) mit einer Streuwinkelverstellvorrichtung (22).

Um die Verstellung des Streuwinkels an einem Kreiselzettwender zu vereinfachen, wird vorgeschlagen, dass jede Streuwinkelverstellvorrichtung (22) einen Antriebsmotor (26) aufweist, der mit einer Betätigungsvorrichtung (24) verbunden ist, und die Betätigungsvorrichtung (24) bei einer Betätigung ein Stellsignal (40) an alle Antriebsmotoren (26) generiert.

## Beschreibung

Die vorliegende Erfindung bezieht sich auf ein Verfahren zur Einstellung der Streuwinkel von mehreren an einem Maschinenrahmen gehaltenen umlaufend angetriebenen Kreiselrechen eines Kreiselzettwenders, die jeweils über zumindest ein Tastrad auf dem Boden abgestützt sind, jedes Tastrad an einem diesem Tastrad zugeordneten Haltearm befestigt ist, der höhen- und/oder schwenkbeweglich mit einem jedem Kreiselrechen zugeordneten Lagerbock verbunden ist, wobei jeder Haltearm mittels einer dem Haltearm zugeordneten Streuwinkelverstellvorrichtung in einer Höhen- und/oder Winkellage zum Lagerbock gehalten ist.

Die Erfindung bezieht sich auch auf einen Kreiselzettwender mit einem Maschinenrahmen, mehreren am Maschinenrahmen gehaltenen umlaufend angetriebenen Kreiselrechen, die jeweils über zumindest ein Tastrad auf dem Boden abgestützt sind, und jedes Tastrad ist an einem diesem Tastrad zugeordneten Haltearm befestigt, der höhen- und/oder schwenkbeweglich mit einem jedem Kreiselrechen zugeordneten Lagerbock verbunden ist, wobei jeder Haltearm mittels einer dem Haltearm zugeordneten Streuwinkelverstellvorrichtung in einer Höhen- und/oder Winkellage zum Lagerbock gehalten ist.

In der Grünfutterernte können durch eine gleichmäßige Trocknung von Blättern und Stängeln erhebliche Nährstoffverluste, beispielsweise durch das Zerbröseln übertrockneter Blätter oder durch Schimmelbildung an feucht gebliebenen, dickeren Stängeln, vermieden werden. Um eine einheitliche Trocknung zu gewährleisten, einen optimalen Trocknungsverlauf zu erreichen und so eine gleichmäßige Konservierung des Futters zu sichern, werden in der Regel Wender eingesetzt, die einen idealen Trocknungsverlauf des Halmgutes sichern sollen. Ein Wender nimmt das Halmgut mithilfe seiner Zinken auf und bringt dabei das noch feuchte Halmgut vom Boden. Dann verteilt er es locker und breit hinter sich, wodurch das Halmgut einfacher vom Wind und der Sonne getrocknet werden kann. Das Wenden von Halmgütern ist ein wesentlicher Bestandteil des Ernteprozesses für die Futterbergung und anschließender Futterkonservierung in der Landwirtschaft. Für das Wenden können Kreiselzettwender eingesetzt werden, die insbesondere in der Heuwerbung und bei der Grassilage Verwendung finden.

Landwirtschaftliche Felder sind oft sehr heterogen, vor allem in Hinblick auf Feuchtigkeit und Ertrag. Aber auch im Trocknungsverlauf kann es zu erheblichen Unterschieden zwischen verschiedenen Feldern kommen. Deshalb ist es vorteilhaft, wenn ein Kreiselzettwender an die jeweiligen Bedingungen angepasst werden kann. Dazu sind an den bekannten Kreiselzettwendern insbesondere die Arbeitshöhe, der Streuwinkel der Kreisel und die Zinkeneinstellung mittels entsprechender technischer Einrichtungen verstellbar. Die richtige Einstellung der verstellbaren Komponenten auf die jeweils herrschenden Erntebedingungen hat einen erheblichen Einfluss auf die Qualität des Wendevorgangs und damit auch des geernteten Futters.

Um unter verschiedenen Erntebedingungen und Verwendungszwecken, sei es für Silage oder Heu, optimale Ergebnisse zu erzielen, sollte der Streuwinkel vor dem Wendevorgang entsprechend angepasst werden. Der Streuwinkel ist definiert als der Winkel zwischen dem Boden und der Bewegungsbahn der Zinkenspitzen des Wenders. Bei einem steileren Streuwinkel wird tendenziell mehr Halmgut zwischen den Kreiseln zurückgelassen und nicht gewendet als bei einem flacheren Streuwinkel. Der Streuwinkel beeinflusst allerdings auch die Aufnahmezeit des Erntegutes und damit, wie lange es an den äußeren Enden der an Kreiselarmen befestigten Zinken festgehalten wird. Bei einem größeren Streuwinkel erreichen die Zinken während einer Umdrehung an ihrem höchsten Punkt einen größeren Abstand zum Boden als bei einem kleineren Streuwinkel. Bei einem frisch gemähten, wenig abgetrockneten Erntegut ist es tendenziell vorteilhaft, das Erntegut beim Wenden mit einem größeren Streuwinkel höher zu werfen als ein leichteres Erntegut, das einen geringeren Feuchtegrad aufweist.

Der Streuwinkel wird in den bekannten Maschinen manuell eingestellt. Die Streuwinkelverstellung erfolgt dabei - wie beispielsweise in den Kreiselzettwendern vom Typ Vendro der Anmelderin - über eine an der Radachse angeschweißte Lasche mit einem eine Verstellkulisse bildenden Lochbild. Die Lasche verläuft entlang der Seite des Achsbocks. Am Achsbock selbst ist ein federbelasteter Bolzen montiert, der in eines der vom Lochbild vorgegebenen Löcher einrastet, um die Lasche in einer gewünschten Winkellage festzulegen. Durch Ziehen dieses Bolzens kann der Streuwinkel durch eine Anpassung des Anstellwinkels des Rades relativ zum Achsbock verstellt werden. Diese Verstellung ist jedoch nur bei völligem Stillstand der Maschine und in angehobenem Zustand möglich. Die manuelle Verstellung verursacht somit einen gewissen Arbeits- und Zeitaufwand, der mit zunehmenden Arbeitsbreiten von Kreiselzettwendern zunimmt, weil dann mehr Kreiselrechen an einer Maschine verbaut sind, deren Streuwinkel verstellt werden muss.

Leider ist es so, dass die Möglichkeit zur Verstellung des Streuwinkels in der Praxis nicht in einem angemessenen Umfang genutzt wird. Ein Benutzer eines Kreiselzettwenders baut diesen bei der Aufnahme der Benutzung bspw. an die Dreipunktaufhängung eines Schleppers an. Nach dem Erreichen eines zu bearbeitenden Feldes wird der Kreiselzettwender mit der Dreipunktaufhängung aus der Transportstellung auf eine geeignete Arbeitshöhe abgesenkt. In der geeigneten Arbeitshöhe werden die Zinken, die sich an den äußeren Enden der Zinkenarme eines Kreiselrechens befinden, bodennah gehalten. Durch eine Verstellung des Oberlenkers der Dreipunktaufhängung kann der Benutzer die Arbeitshöhe der Zinken beeinflussen, die diese während eines Umlaufs an ihrer in Arbeitsrichtung vordersten Stellung haben. Um den Kreiselzettwender passend für einen gutes Arbeitsergebnis einzustellen, nehmen viele Benutzer noch die Möglichkeit wahr, den Oberlenker auf eine geeignete Länge einzustellen. Da mit einer Verstellung des Oberlenkers aber auch der Kippwinkel verstellt wird, in der ein Kreiselzettwender an einem Schlepper gehalten ist, ändert sich dabei auch der Streuwinkel. Nach der Verstellung des Oberlenkers wird von den Benutzern häufig nicht bedacht, dass sich der Streuwinkel vielleicht nicht mehr in einem optimalen Bereich befinden könnte. Deshalb unterbleibt es häufig, nach der Höheneinstellung des Kreiselzettwenders und der Verstellung des Oberlenkers auf eine geeignete Länge auch noch den Streuwinkel gezielt auf einen für ein optimales Arbeitsergebnis günstigen Wert einzustellen. In der abgesenkten Stellung des Kreiselzettwenders ist eine Verstellung des Streuwinkels mit den dafür vorgesehenen manuellen Verstellvorrichtungen kaum noch möglich.

Die Streuwinkelverstellvorrichtung bleibt dabei in seiner Position. Durch eine solche Einstellung des Streuwinkels können die technischen Potenziale des Kreiselzettwenders jedoch nicht voll ausgeschöpft werden. Außerdem kann es durch eine falsche Einstellung der Streuwinkelverstellvorrichtung und der Arbeitshöhe zu einer unzulässigen Lastverteilung am Zugfahrzeug kommen, oder zu Bodenkontakt der Zinken, wodurch das Zugfahrzeug und/oder der Wender beschädigt werden können.

Es ist die Aufgabe der vorliegenden Erfindung, die Verstellung des Streuwinkels an einem Kreiselzettwender zu vereinfachen und zu automatisieren.

Die Aufgabe wird für einen gattungsgemäßen Verfahren gelöst, indem die Streuwinkeleinstellung durch die Betätigung von Antriebsmotoren erfolgt, die jeweils ein Bestandteil einer jeweiligen Streuwinkelverstellvorrichtung sind, und die Antriebsmotoren der Streuwinkelverstellvorrichtungen mittels einer Betätigungsvorrichtung gemeinsam betätigt werden. Die Betätigungsvorrichtung kann insbesondere eine zentrale Steuerungseinrichtung sein. Die gemeinsame Betätigung meint im Besonderen ein Bereitstellen von Steuersignalen an alle Antriebsmotoren. Eine gemeinsame Betätigung umfasst neben der gleichzeitigen Betätigung auch eine sequentielle oder gruppenweise Betätigung der einzelnen Antriebsmotoren.

Die Aufgabe wird für einen gattungsgemäßen Kreiselzettwender gelöst, indem jede Streuwinkelverstellvorrichtung einen Antriebsmotor aufweist, der mit einer Betätigungsvorrichtung verbunden ist, und die Betätigungsvorrichtung bei einer Betätigung ein Stellsignal an alle Antriebsmotoren generiert.

Alternativ zu der Ausführung des Kreiselzettwenders als angebaute Maschine, welche über eine Dreipunktaufhängung am Zugfahrzeug angehängt ist, kann der Kreiselzettwender auch als gezogene Maschine ausgeführt sein. Der Kreiselzettwender ist in diesem Fall mit einem eigenen Transportfahrwerk ausgestattet, welches ein oder mehrere insbesondere gelenkte Räder aufweisen kann. Ein solcher Kreiselzettwender kann unabhängig von der Hubkraft der Zugmaschine verwendet werden. Die Anbindung des gezogenen Kreiselzettwenders kann über eine Dreipunktanhängung, eine Zugmaulanhängung oder alternativ über eine Kugelkopfkupplung erfolgen.

Darüber hinaus verfügt der gezogene Kreiselzettwender über einen eigenen Höhenverstellmechanismus. Dieser Mechanismus kann beispielsweise einen Oberlenker, insbesondere einen hydraulisch betätigten Oberlenker, umfassen. Grundsätzlich ist jedoch jede geeignete Vorrichtung zur Höhenverstellung anwendbar.

Im Folgenden wird der Erfindungsgegenstand aus Gründen der Übersichtlichkeit und besseren Verständlichkeit beispielhaft für einen über eine Dreipunktaufhängung angebauten Kreiselzettwender beschrieben. Die Ausgestaltung und Anwendung für einen gezogenen Kreiselzettwender erfolgt jedoch in analoger Weise und ist vom Schutzumfang dieser Anmeldung umfasst.

Die Streuwinkeleinstellung mittels einer Betätigungsvorrichtung, die mit Antriebsmotoren verbunden ist, die jeweils ein Bestandteil einer jeweiligen Streuwinkelverstellvorrichtung sind, macht es wesentlich einfacher, die Einstellung des Streuwinkels zu verändern. Um den Streuwinkel eines Kreiselzettwenders zu verstellen, muss nur noch die Betätigungsvorrichtung betätigt werden, worauf dann die Antriebsmotoren eines jeden Kreiselrechens mit einer entsprechenden Stellbewegung den gewünschten Streuwinkel des ihnen zugeordneten Kreiselrechens einstellen.

Der technische und kostenmäßige Aufwand, jede Streuwinkelverstellvorrichtung mit einem Antriebsmotor zu versehen, ist vertretbar im Verhältnis zum technischen Nutzen, der damit erzielt werden kann. Da jeder Kreiselrechen für sich ein überschaubares Gewicht hat, können die Antriebsmotoren vergleichsweise klein und kompakt ausgeführt werden. Auch wenn im Bereich der Kreiselrechen nur ein kleiner Bauraum für die Anordnung eines Antriebsmotors verfügbar ist, reicht dieser für die benötigte Größe eines geeigneten Antriebsmotors aus. Es ist insbesondere auch möglich, den Antriebsmotor im Bereich eines Kreiselrechens mit einer ausreichenden Antriebsenergie zu versorgen.

Die Verbesserung ist besonders vorteilhaft bei Kreiselzettwendern, die eine größere Arbeitsbreite haben. So werden bei Kreiselzettwendern, die eine Arbeitsbreite von beispielsweise 10 m bis 14 m haben, zwölf Kreiselrechen eingesetzt. Bei der motorischen Verstellung des Streuwinkels mit einer Betätigungsvorrichtung werden bei diesem Kreiselzettwender durch eine einzige Betätigung die Streuwinkelverstellvorrichtungsposition aller zwölf Kreiselrechen in eine gewünschte Richtung verstellt. Dabei ist es vorteilhaft, dass mit der einen Bedieneingabe auch alle zwölf Kreiselrechen in gleicher Weise verstellt werden. Durch die maschinelle Verstellung ist es nicht möglich, die Verstellung eines Kreiselrechens zu vergessen oder versehentlich Kreiselrechen auf unterschiedliche Streuwinkelverstellvorrichtungspositionen einzustellen. Die Streuwinkelverstellung mittels Antriebsmotoren ermöglicht zudem auch eine stufenlose Verstellung des Streuwinkels, was einen weiteren Vortel für das Arbeitsergebnis bewirken kann.

Ein wesentlicher Vorteil der Erfindung ist auch in der erheblichen Verkürzung der Prozesszeit zu sehen. Bei der Verstellung des Streuwinkels über die Betätigung einer Betätigungsvorrichtung und der nachfolgenden Verstellung durch Antriebsmotoren ist die Verstellung des Streuwinkels an allen Kreiselrechen eines Kreiselzettwenders in wenigen Sekunden erledigt, während es mit der herkömmlichen Technik für jeden einzelnen Kreiselrechen etwa eine Minute dauert, die manuelle Verstellung vorzunehmen. Die Verstellung aller Antriebsmotoren muss nicht zwangsläufig zeitgleich erfolgen. Es ist möglich, die Verstellung auch paarweise oder gruppenweise nacheinander vorzunehmen.

Für einen Benutzer ergibt sich aus der motorischen Verstellung des Streuwinkels eine erhebliche Arbeitserleichterung. Es ist nicht mehr erforderlich, bei jedem einzelnen Kreiselrechen manuell die Verriegelung zu lösen, dabei das Tastrad zu halten, damit es nicht herabfällt, dann das Tastrad manuell genau so weit anzuheben oder abzusenken, dass sich das Tastrad in der gewünschten neuen räumlichen Lage befindet und darin auch wieder verriegelt werden kann, und dann das Tastrad wieder zu verriegeln. Diese manuell auszuführenden Arbeiten sind auch deshalb lästig, weil diese von der Unterseite der Maschine herausgeführt werden müssen. Im Regelfall muss der Kreiselzettwender mit dem Schlepper extra angehoben werden, damit die Streuwinkelverstellvorrichtungen überhaupt für einen Benutzer zugänglich sind. Die Maschinensicherheit wird erhöht, weil sich ein Benutzer bei der Verstellarbeit nicht mehr unter einer schwebenden Last aufhalten muss.

Bei einer ausreichenden Dimensionierung der Stellkräfte der Antriebsmotoren und der übrigen Komponenten der Streuwinkelverstellvorrichtungen ist es möglich, die Streuwinkelverstellvorrichtungsposition, bzw. den Streuwinkel auch bei einer auf den Boden abgesenkten oder geparkten Maschine oder sogar während des laufenden Betriebs des Kreiselzettwenders zu verstellen. Es ist nicht mehr zwingend erforderlich, den Kreiselzettwender mit einem Schlepper anzuheben, um überhaupt Arbeiten an den Streuwinkelverstellvorrichtungen ausführen zu können.

Wegen der vereinfachten Verstellung der Streuwinkelverstellvorrichtungsposition, bzw. des Streuwinkels ist zu erwarten, dass die Benutzer des Kreiselzettwenders die Streuwinkelverstellvorrichtungsposition häufiger als bei den bekannten Streuwinkelverstellvorrichtungen verändern um auf einen optimalen Streuwinkel einzustellen. Durch die einfachere Verstellung des Streuwinkels können Leistungspotenziale des Kreiselzettwenders aktiviert werden, die vorher von den Benutzern nicht wahrgenommen worden sind.

Als Antriebsmotoren kommen Kraftmaschinen in Betracht, die eine hydraulisch, elektrisch oder pneumatisch bereitgestellte Energie in Bewegungsenergie umwandeln. Welche Energieform konkret benutzt wird, wird anhand von Zweckmäßigkeitsüberlegungen bestimmt.

Eine Betätigungsvorrichtung kann auf unterschiedliche Weise ausgebildet sein.

In der einfachsten Form handelt es sich um einen an dem Kreiselzettwender angebrachten Schalter, mit dem der Antriebsmotor durch eine manuelle Eingabe eines Benutzers in eine gewünschte Antriebsrichtung ein- oder ausgeschaltet werden kann. Die Betätigungsvorrichtung kann auch fernbedienbar ausgestaltet sein, beispielsweise aus der Kabine des Schleppers heraus über einen dort installierten einfachen isolierten Schalter oder als ein Schalter, der ein Teil einer gesonderten Bedienbox für den Kreiselzettwender ist. Die Bedienbox kann beispielsweise über Kabel, Leitungen, Lichtwellenleiter, eine Infrarot-Datenübermittlung und/oder eine Funkverbindung mit dem Kreiselzettwender verbunden sein, über die eine Bedieneingabe von der Bedienbox an die Antriebsmotoren übertragen wird. Der Begriff der Funkverbindung schließt verschiedene Datenübertragungsmöglichkeiten per Funk ein, so beispielsweise über Bluetooth, NFC, WLAN oder mittelbar über eine Internetverbindung. Die Bedienbox kann eine Bedienoberfläche haben, die aus einfachen mechanisch betätigbaren Knöpfen, Schaltern, und/oder Tasten besteht. Die Betätigung der Bedienbox durch einen Benutzer kann aber auch über eine grafische Benutzeroberfläche auf einem Anzeigedisplay mit dort angezeigten Softkeys erfolgen.

Bedieneingaben eines Benutzers, die dieser in der Kabine eines Schleppers ausführt, können insbesondere über ein Bussystem vom Schlepper an die Antriebsmotoren im Kreiselzettwender übertragen werden, wenn die Betätigungsvorrichtung an das Bussystem des Schleppers angeschlossen ist, der Kreiselzettwender über eine Schnittstelle zur Übertragung von Daten aus dem Bussystem des Schleppers verfügt und der Kreiselzettwender technisch darauf ausgelegt ist, eine über das Bussystem übermittelte Bedieneingabe an die Antriebsmotoren zu übermitteln. Ein auf dem Kreiselzettwender installiertes Bussystem kann auch eine eigene Schnittstelle aufweisen, über die Bedienbefehle direkt in das Bussystem eingespeist und von Netzknoten, die den Antriebsmotoren zugeordnet sind, wieder ausgelesen werden können.

Die Betätigungsvorrichtung kann auch als ein Bestandteil einer Anwendungssoftware ausgestaltet sein, die beispielsweise über ein dafür vorgesehenes Display des Schleppers oder über ein elektronisches Mobilgerät bedienbar ist. Die Bedienung über eine auf einem elektronischen Mobilgerät bedienbare Anwendungssoftware hat den Vorteil, dass ein Benutzer eine Bedieneingabe auch neben dem Kreiselzettwender stehend machen kann, von wo aus er die durch die Bedieneingabe ausgelösten Veränderungen des Streuwinkels beobachten und auf ihre Tauglichkeit überprüfen kann.

Die Betätigungsvorrichtung kann auch von einer Verstellautomatik betätigt werden, indem diese ein Verstellsignal generiert. In einem solchen Fall wird der Streuwinkel nicht infolge einer manuellen Betätigung der Betätigungsvorrichtung durch den Benutzer des Kreiselzettwenders ausgelöst, sondern maschinell, beispielsweise von einer Software.

Wenn in dieser Beschreibung von einem Haltearm die Rede ist, so kann es sich dabei beispielsweise um einen Schwenkarm handeln, der um ein Drehlager schwenkbeweglich gelagert ist. Ein Haltearm kann aber auch ein Bauteil sein, das in einer Längsrichtung verlagerbar ist, beispielsweise ein an einem Linearantrieb befestigtes Lager für das Tastrad oder dergleichen.

Nach einer Ausgestaltung der Erfindung ist eine Einstellung oder Verstellung der Arbeitshöhe des Kreiselzettwenders und/oder der Kreiselrechen mit einer Betätigung der Antriebsmotoren der Streuwinkelverstellvorrichtungen verbunden, und/oder eine Betätigung der Betätigungsvorrichtung der Streuwinkeleinstellung ist mit einer Einstellung oder Verstellung der Arbeitshöhe des Kreiselzettwenders verbunden.

Wenn die Arbeitshöhe des Kreiselzettwenders und/oder der Kreiselrechen eingestellt oder verstellt wird, ändert sich ohne eine Anpassung der Streuwinkelverstellvorrichtungsposition der sich ergebende Streuwinkel. Genauso kann es sein, dass nach einer Verstellung des Streuwinkels, bzw. Streuwinkelverstellvorrichtungsposition durch die Betätigung der Antriebsmotoren der Streuwinkelverstellvorrichtungen die Arbeitshöhe des Kreiselzettwenders und/oder der Kreiselrechen nicht mehr zum neuen Streuwinkel optimal passt. Wenn die Relation der Arbeitshöhe zum eingestellten Streuwinkel nicht passt, kann es in ungünstigen Fällen dazu kommen, dass die Zinken den Boden berühren und dabei beschädigt werden und zu viele Fremdbestandteile in das Erntegut mischen, so weit vom Boden abgehoben sind, dass kaum noch Erntegut aufgenommen wird, oder die Wurfweite und -höhe des Ernteguts zu kurz oder lang ist. Durch die vorgeschlagene Verbindung der Einstellungen oder Verstellungen miteinander erfolgt eine automatische Adaption der Arbeitshöhe oder des Streuwinkels, bzw. der Streuwinkelverstellvorrichtungsposition als zweiter Größe, wenn wechselweise die Arbeitshöhe oder der Streuwinkel als erste Größe eingestellt oder verstellt wird. Für die Adaption kann in einer programmierten Software ein Kennfeld hinterlegt sein, aus dem sich für eine neue erste Größe eine neue zweite Größe als Sollwert für eine Adaption auslesen lässt. Die Verbindung der Einstellung oder Verstellung der Arbeitshöhe mit der Einstellung oder Verstellung der Streuwinkelverstellvorrichtungsposition kann insbesondere über eine entsprechend programmierte Software erfolgen.

Nach einer Ausgestaltung der Erfindung sind die Einstellung oder Verstellung der Arbeitshöhe des Kreiselzettwenders und/oder der Kreiselrechen und die Betätigung der Antriebsmotoren der Streuwinkelverstellvorrichtungen durch ein technisches Zwangsmittel miteinander verbunden. Mit dem Begriff des technischen Zwangsmittels ist eine Vorrichtung gemeint, die nach einer Einstellung oder Veränderung der Arbeitshöhe und/oder der Streuwinkelverstellvorrichtungsposition und/oder des Streuwinkels den weiteren Betrieb oder die Betriebsaufnahme des Kreiselzettwenders blockiert, solange nach einer Einstellung oder Verstellung der ersten Größe nicht entweder auch eine Einstellung oder Verstellung der zweiten Größe vorgenommen wird oder das technische Zwangsmittel bewusst aufgehoben wird, beispielsweise durch eine bloße Quittierfunktion nach einer entsprechenden Fehlermeldung oder einer Quittierung eines vorgeschlagenen neuen Sollwerts für die zweite Größe. Durch das technische Zwangsmittel wird ein Benutzer des Kreiselzettwenders dazu gezwungen, eine bewusste Entscheidung zu treffen, ob er nach der Einstellung oder Verstellung einer ersten Größe dazu auch die zweite Größe anpassen will oder das unterlässt, indem er die aktuelle Einstellung der zweiten Größe beibehält. Das technische Zwangsmittel hat auf diese Weise eine Erinnerungsfunktion, die einen Benutzer dazu zwingt, sich bewusst mit der Frage auseinanderzusetzen, ob er nach der Einstellung oder Verstellung der ersten Größe nicht auch die zweite Größe anpassen sollte. Es ist beispielsweise möglich, das technische Zwangsmittel als einer Abfrageroutine im Ablauf eines Softwareprogramms zu programmieren.

Nach einer Ausgestaltung der Erfindung legt ein jeweiliger Antriebsmotor den ihm zugeordneten Haltearm nach seiner Abschaltung im jeweils eingestellten Streuwinkel fest. Wenn der Antriebsmotor den Haltearm im jeweils eingestellten Streuwinkel festlegt, kann auf zusätzliche technische Mittel, die den Haltearm in einer jeweils eingestellten Position halten, wie beispielsweise Sperrklinken, Riegel, gesonderte Bremssysteme und dergleichen, verzichtet werden. Wenn der Antriebsmotor ein nächstes Mal betätigt wird, ist es auch nicht erforderlich, zunächst die entsprechenden Sperren zu lösen, bevor eine entsprechende Verstellbewegung bewirkt werden kann. Die Streuwinkelverstellvorrichtung wird dadurch kostengünstiger und leichter. Der Antriebsmotor und/oder der dazugehörige Abtrieb können für die Festlegung so ausgelegt sein, dass sie unter Einwirkung der im Betrieb üblichen Kräfte auf das Tastrad keine Verstellung des Streuwinkels zulassen. Für diesen Zweck kann der Antriebsmotor nach seiner Abschaltung blockiert sein, und/oder der dazugehörige Abtrieb kann zumindest teilweise selbsthemmend ausgelegt sein. Ein Beispiel für einen außerhalb seines Betriebs blockierten Antriebsmotor ist ein Hydraulikzylinder, dessen Hydraulikflüssigkeit bei geschlossenem Ansteuerungsventil nicht kompressibel ist, oder ein Elektromotor, der im Ruhezustand ein so hohes Drehmoment gegen eine Drehbewegung aufweist, dass sich der mit ihm verbundene Haltearm unter den im Normalbetrieb auftretenden Kräften nicht bewegen kann. Beispiele für typische selbsthemmende Getriebe sind Schneckengetriebe oder lineare Spindelgetriebe, wenn der Vorwärtswirkungsgrad unter 50 % liegt.

Nach einer Ausgestaltung der Erfindung weist die Betätigungsvorrichtung eine Verstellautomatik auf, die mittels einer programmierten Software auf Basis einer Bedieneingabe und/oder einer Auswertung von Sensorsignalen eine automatisierte Verstellung des Streuwinkels durch die Übermittlung von Stellsignalen an die Antriebsmotoren der Streuwinkelverstellvorrichtungen ausführt. Eine Verstellautomatik kann auf unterschiedliche Weise ausgebildet sein. In einer einfachen Version setzt sie beispielsweise einen One-Touch-Bedienbefehl in eine Anhebe- oder Absenkbewegung der Antriebsmotoren um, wobei die Verstellautomatik den Bewegungsablauf und das Erreichen der gewünschten Endposition kontrolliert. Bei Funktionsstörungen kann die Verstellautomatik auch solche erkennen und einen Anzeigesignal für das Vorliegen einer Störung generieren. Die Verstellautomatik kann Logikprüfungen vornehmen, beispielsweise, ob Stellbefehle ausführbar sind. Die Verstellautomatik kann darauf programmiert sein, in Standardsituationen einen standardmäßig vorgegebenen Streuwinkel einzustellen. So kann es sinnvoll sein, bei dem Anschluss eines Kreiselzettwenders an ein Zugfahrzeug den Streuwinkel standardmäßig zunächst auf einen mittleren Wert einzustellen, um sicherzustellen, dass immer ein zumindest durchschnittliches Arbeitsergebnis erzielt wird. In Sondersituationen, wenn beispielsweise die Antriebsräder des Zugfahrzeugs Schlupf haben, der auf feuchte Bodenverhältnisse schließen lässt, kann der Streuwinkel auf einen Wert eingestellt werden, der zu feuchtem Erntegut passt. In einer anspruchsvolleren Variante kann eine Verstellautomatik beispielsweise auch darauf ausgelegt sein, in einem Automatikmodus selbstständig Veränderungen des Streuwinkels vorzunehmen. Um dabei eine gute Funktion sicherzustellen, ist es vorteilhaft, wenn die Verstellautomatik dabei Sensorsignale von Sensoren auswerten kann, die funktionsrelevante Parameter überwachen und an die Verstellautomatik übermitteln.

Nach einer Ausgestaltung der Erfindung weist zumindest eine der Streuwinkelverstellvorrichtungen einen Lagesensor auf, der ein Sensorsignal generiert, das repräsentativ ist für eine aktuelle Streuwinkelverstellvorrichtungsposition und/oder den aktuell eingestellten Streuwinkel, und das Sensorsignal wird an eine Anzeigevorrichtung übermittelt, die die aktuelle Streuwinkelverstellvorrichtungsposition und/oder den aktuell eingestellten Streuwinkel auf Basis des übermittelten Sensorwertes anzeigt. Der Lagesensor ermöglicht eine Anzeige der aktuellen Streuwinkelverstellvorrichtungsposition und/oder des aktuell eingestellten Streuwinkels. Eine solche Anzeige ist insbesondere dann von Interesse, wenn die Kontrolle und die Verstellung des Streuwinkels aus einer Entfernung vom Kreiselzettwender erfolgen soll, beispielsweise, wenn ein Benutzer in der Kabine eines Zugfahrzeugs sitzt. Als Lagesensoren können beispielsweise Abstandssensoren verwendet werden, mit denen eine Bewegung des Stellhebels erkannt werden kann. Eine Verdrehbewegung des Haltearms kann auch über ein Drehpotentiometer erkannt werden.

Nach einer Ausgestaltung der Erfindung weist der Kreiselzettwender oder das Zugfahrzeug zumindest einen Feuchtesensor auf, der die Feuchte des aktuell bearbeiteten Ernteguts ermittelt, ein Sensorsignal generiert, das repräsentativ ist für die Feuchte des aktuell bearbeiteten Ernteguts, und das Sensorsignal an eine Anzeigevorrichtung übermittelt, die die Feuchte des aktuell bearbeiteten Ernteguts auf Basis des übermittelten Sensorwertes anzeigt. Der verwendete Feuchtesensor kann beispielsweise nach dem physikalischen Prinzip der Mikrowellenabsorption, der kapazitiven Messung oder der elektrischen Leitfähigkeit arbeiten. Der Feuchtesensor kann so im Kreiselzettwender angeordnet sein, dass er in einem ständigen Kontakt zu dem vom Kreiselzettwender bearbeiteten Erntegut steht und eine zuverlässige Messung des Feuchtewertes mit dem verwendeten Meßprinzip ausführen kann. Die Feuchte des Ernteguts ist ein wichtiger Parameter, um einen optimalen Streuwinkel zu finden. Auf einer zu bearbeitenden Fläche kann die Feuchte des Ernteguts zudem stark schwanken, je nach Beschattung, Bodenverhältnissen, Verunkrautung und dergleichen. Durch den Feuchtesensor und die Anzeige der jeweiligen Feuchtewerte in einer Anzeigevorrichtung ist es für den Benutzer des Kreiselzettwenders möglich, Unterschiede in der Feuchte des aktuell bearbeiteten Ernteguts zu erkennen und bei Bedarf den Streuwinkel an geänderte feuchte Verhältnisse anzupassen.

Nach einer Ausgestaltung der Erfindung weist der Kreiselzettwender oder das Zugfahrzeug zumindest einen optischen Sensor auf, der ein Bildsignal vom Wurfbild des bearbeiteten Ernteguts generiert, und das Bildsignal an eine Anzeigevorrichtung übermittelt, die das aktuelle Wurfbild des bearbeiteten Ernteguts auf Basis des übermittelten Bildsignals anzeigt. Je nach Anbauverhältnissen des Kreiselzettwenders an einem Zugfahrzeug kann es für den Fahrer des Zugfahrzeugs schwierig sein, das Wurfbild zu kontrollieren, dass der Kreiselzettwender bei der Bearbeitung einer Fläche erzeugt. Durch die Anzeige des Wurfbildes auf einer Anzeigevorrichtung kann der Fahrer besser erkennen, ob das Wurfbild optimal ist oder gegebenenfalls Anpassungen des Streuwinkels vorgenommen werden müssen. Wenn ein von einem optischen Sensor aufgenommenes Bildsignal vom Wurfbild des bearbeiteten Ernteguts verfügbar ist, kann dieses von einer Software im Rahmen einer Bildauswertung analysiert werden, um auf Basis des Ergebnisses dieser Analyse günstigere Winkel für den Streuwinkel vorzuschlagen.

Nach einer Ausgestaltung der Erfindung weist zumindest eine der Streuwinkelverstellvorrichtungen einen Lagesensor auf, der ein Sensorsignal generiert, das repräsentativ ist für eine aktuelle Streuwinkelverstellvorrichtungsposition und/oder den aktuell eingestellten Streuwinkel, und/oder der Kreiselzettwender und/oder das Zugfahrzeug weist zumindest einen Feuchtesensor auf, der die Feuchte des aktuell bearbeiteten Ernteguts ermittelt und ein Sensorsignal generiert, das repräsentativ ist für die Feuchte des aktuell bearbeiteten Ernteguts, und/oder der Kreiselzettwender und/oder das Zugfahrzeug weist zumindest einen optischen Sensor auf, der ein Bildsignal vom Wurfbild des bearbeiteten Ernteguts generiert, und das vom Lagesensor generierte Sensorsignal, und/oder das vom Feuchtesensor generierte Sensorsignal und/oder das vom optischen Sensor generierte Bildsignal werden an eine Auswertesoftware übermittelt, die anhand einer Programmierung einen Sollwert für die Einstellung einer Streuwinkelverstellvorrichtungsposition und/oder der Streuwinkel der Kreiselrechen generiert. Durch die Übermittlung der Sensorwerte an eine Auswertesoftware ist in einer ersten Stufe eine kontinuierliche Kontrolle der Sensorwerte möglich. Melden die Sensoren in einem betrachteten Zeitintervall erheblich veränderte Sensorwerte, kann unmittelbar ein Warnsignal ausgegeben werden, dass möglicherweise ein Korrekturbedarf besteht. Das sofortige Erkennen von Veränderungen ist somit nicht mehr von der Konzentration und Aufmerksamkeit des Fahrers des Zugfahrzeugs abhängig, sondern kann durch die Auswertesoftware erfolgen. Anstelle eines Warnsignals kann auch unmittelbar ein Sollwert ausgegeben und/oder angezeigt werden. In einer weiteren Stufe kann die Auswertesoftware auch darauf programmiert sein, bei erkannten Veränderungen der Sensorwerte entweder eine optimierte Einstellung durch die Ausgabe eines entsprechenden neuen Sollwerts vorzuschlagen, dessen Einstellung dann ein Benutzer durch entsprechende Bedieneingaben umsetzen muss, oder in einem automatisierten Prozess eigenständig Prozessparameter, insbesondere den Streuwinkel, bzw. die Streuwinkelverstellvorrichtungsposition, auf den neuen Sollwert zu verstellen.

Nach einer Ausgestaltung der Erfindung wird der von der Auswertesoftware ermittelte Sollwert der Verstellautomatik und/oder der Anzeigevorrichtung übermittelt. Durch die Übermittlung des Sollwerts an die Verstellautomatik kann diese die Streuwinkelverstellvorrichtungsposition, bzw. den Streuwinkel, sofort entsprechend anpassen. Bei einer Anzeige des neuen Sollwerts auf einer Anzeigevorrichtung kann ein Benutzer entscheiden, ob er den vorgeschlagenen Sollwert in die Maschineneinstellung übernehmen möchte, ob er den Sollwert identisch übernimmt, wie er vorgeschlagen ist, oder ob er einen abgewandelten Sollwert einstellt, und zu welchem Zeitpunkt er die Verstellung des Streuwinkels vornehmen möchte.

Nach einer Ausgestaltung der Erfindung weist der Kreiselzettwender und/oder das Zugfahrzeug einen Arbeitshöhensensor auf, der ein Sensorsignal generiert, das repräsentativ ist für die Höheneinstellung der Kreiselrechen, der Arbeitshöhensensor übermittelt das Sensorsignal an die Auswertesoftware, und die Auswertesoftware bezieht anhand einer Programmierung das die Höheneinstellung repräsentierende Sensorsignal in die Berechnung des Sollwerts für die Einstellung einer Streuwinkelverstellvorrichtungsposition und/oder der Streuwinkel der Kreiselrechen ein. Der Arbeitshöhensensor kann ein Sensor sein, der einen tatsächlichen Abstand zum Boden misst, beispielsweise durch die Laufzeit von Lichtimpulsen oder von Schallwellen. Dem Arbeitshöhensensor kann aber auch zunächst ein Wert für eine Arbeitshöhe manuell vorgegeben werden, und der Arbeitshöhensensor misst nur relative Veränderungen zu diesem Wert. Der Arbeitshöhensensor kann allerdings auch ein virtueller Sensor sein, der einen Wert für eine Arbeitshöhe nur aus einem Wert errechnet, den das Zugfahrzeug als Höheneinstellung der Dreipunktaufhängung meldet. Schließlich kann der Arbeitshöhensensor bei der Bestimmung eines Sensorwertes auch die vorgenannten Werte miteinander zu einem Sensorwert verrechnen. Wenn die Auswertesoftware den Wert für die Arbeitshöhe kennt, mit der der Kreiselzettwender betrieben werden soll, ist es für die Auswertesoftware einfacher, einen zu dieser Arbeitshöhe passenden Wert für eine Streuwinkelverstellvorrichtungsposition zu bestimmen. Zu einer jeweiligen Arbeit höhere passende Werte für die Streuwinkelverstellvorrichtungsposition können in einer Tabelle gespeichert sein, auf die die Auswertesoftware zugreifen kann. Wenn der Auswertesoftware weitere Daten des Arbeitsprozesses bekannt sind, wie beispielsweise die Art und Güte des zu bearbeitenden Ernteguts, dessen Feuchtigkeit sowie aktuelle Wind- und Wetterverhältnisse, kann ein optimierter Wert für den Streuwinkel einem Kennfeld entnommen werden.

Nach einer Ausgestaltung der Erfindung generiert die Auswertesoftware einen Wert, der repräsentativ ist für die Höheneinstellung der Kreiselrechen, und die Auswertesoftware bezieht anhand einer Programmierung diesen die Höheneinstellung repräsentierenden Wert in die Berechnung des Sollwerts für die Einstellung der Streuwinkelverstellvorrichtungsposition und/oder der Streuwinkel der Kreiselrechen ein. Da die Höheneinstellung eines Kreiselzettwenders einen erheblichen Einfluss darauf hat, welche Streuwinkelverstellvorrichtungsposition in einem Arbeitsprozess als optimal anzusehen ist, bzw. der eingestellte Streuwinkel aus der gemeinsamen Einstellung aus Höheneinstellung und Streuwinkelverstellvorrichtungsposition resultiert, ist es vorteilhaft, wenn die Auswertesoftware bei der Berechnung des Sollwerts für die Einstellung der Streuwinkelverstellvorrichtungsposition und/oder der Streuwinkel der Kreiselrechen einen variablen Wert für die Höheneinstellung der Kreiselrechen berücksichtigt. Bei dem von der Auswertesoftware verarbeiteten Wert für die Höheneinstellung der Kreiselrechen kann es sich um einen rechnerisch ermittelten Wert, einen manuell von einem Benutzer eingegebenen Wert oder um einen von einem Sensor gemessenen Wert handeln. Auch wenn der in die Berechnung des Sollwerts eingeflossene Wert für die Höheneinstellung möglicherweise nicht ganz genau ist, kann der auf diese Weise ermittelte Sollwert für die Streuwinkelverstellvorrichtungsposition für ein gutes Arbeitsergebnisse besser geeignet sein als eine unveränderte zufällig aktuell eingestellte Streuwinkelverstellvorrichtungsposition.

Nach einer Ausgestaltung der Erfindung generiert die Verstellautomatik anhand einer Programmierung bei Eingang eines Bodenkontaktsignals ein Stellsignal zur Anhebung der Höheneinstellung der Kreiselrechen auf einen neuen Höheneinstellwert und in Abhängigkeit von dem neuen Höheneinstellwert einen dazu passenden Wert für die Einstellung der Streuwinkelverstellvorrichtungsposition der Kreiselrechen, vergleicht diesen Wert für die Einstellung der Streuwinkelverstellvorrichtungsposition der Kreiselrechen mit der aktuellen Einstellung der Streuwinkelverstellvorrichtungsposition der Kreiselrechen und führt bei einer Abweichung des neuen Wertes von der aktuell eingestellten Streuwinkelverstellvorrichtungsposition eine automatisierte Verstellung der Streuwinkelverstellvorrichtungspositiondurch die Übermittlung von Stellsignalen an die Antriebsmotoren der Streuwinkelverstellvorrichtungen aus. Wenn die Zinken der Kreiselrechen einen Bodenkontakt haben, besteht ein erhebliches Risiko, dass diese dabei beschädigt werden könnten. Auch wird der Wurfprozess, mit dem das Erntegut vom Boden abgehoben und in die Luft geschleudert werden soll, durch den Bodenkontakt gestört. Schließlich besteht das Risiko, dass die Zinken bei einem Bodenkontakt Steine, Bodenkrumen, Staub, abgestorbene und verschimmelte Pflanzenreste und dergleichen vom Boden abheben, in das Erntegut mischen und dessen Nährwert dadurch erheblich mindern. Um solche negativen Effekte nach Möglichkeit vollständig zu vermeiden, ist es vorteilhaft, die Kreiselrechen bei einem Bodenkontakt unmittelbar anzuheben. Das kann beispielsweise durch einen von der Verstellautomatik generierten Stellbefehl an die Dreipunktaufhängung geschehen. Möglicherweise ist nach einer solchen Anhebung der Kreiselrechen die eingestellte Streuwinkelverstellvorrichtungsposition für die neue Höheneinstellung nicht mehr optimal. Es kann deshalb vorteilhaft sein, die automatische Anhebung der Kreiselrechen mit einer von der Verstellautomatik ausgeführten Korrektur der Streuwinkelverstellvorrichtungsposition zu kombinieren.

Nach einer Ausgestaltung der Erfindung sind als Antriebsmotoren der Streuwinkelverstellvorrichtungen jeweils in einer Ebene unterhalb des zugehörigen Kreiselrechens angeordnete Elektromotoren verwendet. Bei einer Anordnung der Antriebsmotoren in einer Ebene unterhalb eines zugehörigen Kreiselrechens kann die Antriebskraft des Antriebsmotors und die von ihm ausgelöste Stellbewegung unmittelbar auf den Haltearm übertragen werden. Der maschinenbauliche Aufwand kann dadurch gering gehalten werden. Für die Antriebsmotoren wird der Bauraum benutzt, der auch schon bei den vorbekannten Kreiselzettwendern für die mechanischen Streuwinkelverstellvorrichtungen genutzt worden ist. Dadurch ist es möglich, für den Käufer und Benutzer eines Kreiselzettwenders die mit einem Antriebsmotor versehenen Streuwinkelverstellvorrichtungen als eine Variante zu den mechanischen Streuwinkelverstellvorrichtungen anzubieten, so dass der Käufer oder Benutzer eines Kreiselzettwender die Wahl hat, seinen Kreiselzettwender mit der mechanischen oder motorischen Variante auszustatten. Durch die Verwendung desselben Bauraums ist der Anpassungsbedarf gering, wenn anstelle einer mechanischen Streuwinkelverstellvorrichtung eine solche mit einem Antriebsmotor eingebaut werden soll. Somit ist es auch möglich, im Markt vorhandene alte Maschinen mit der motorischen Streuwinkelverstellvorrichtung nachzurüsten.

Die Verwendung von Elektromotoren als Antriebsmotoren ist vorteilhaft, weil diese über eine hohe Leistungsdichte verfügen und kompakte Abmessungen haben, unempfindlich sind für äußere Verschmutzungen, nahezu wartungsfrei betreibbar sind und leicht über Kabel mit der notwendigen Antriebsenergie versorgt werden können.

Da die Zinken der Kreiselrechen um den Achsbock herum rotieren und der Achsbock selbst vom Tastrad auf Abstand zum Boden gehalten wird, ist der Bauraum zwischen der Ebene eines Kreiselrechens bis zum Tastrad gut gegen Fremdkörper geschützt. Das Risiko, dass die Antriebsmotoren bei dem Arbeitsprozess beschädigt werden könnten, ist in diesem Bauraum gering.

Nach einer Ausgestaltung der Erfindung werden die Elektromotoren jeweils aus einer Stromquelle versorgt, die in einer Ebene unterhalb des zugehörigen Kreiselrechens angeordnet ist. Durch die Anordnung einer Stromquelle in derselben Ebene wie der zugehörige Elektromotor entfällt die Notwendigkeit, den Elektromotor durch den rotierenden Kreiselrechen hindurch mit Energie zu versorgen. Der maschinenbauliche Aufwand für die Bereitstellung von Energie für den Antriebsmotor bleibt dadurch gering. Wie vorstehend dargelegt, ist die Stromquelle in dem Bauraum in einer Ebene unterhalb des zugehörigen Kreiselrechens gut gegen Beschädigungen durch Fremdkörper während des Arbeitsprozesses geschützt. Die Stromquelle kann beispielsweise als Akkumulator oder als ein Dynamo ausgebildet sein. Wenn ein Akkumulator als Stromquelle verwendet wird, kann dieser für Aufladezwecke leicht entnommen und wieder eingebaut werden.

Nach einer Ausgestaltung der Erfindung sind die Antriebsmotoren mit der Betätigungsvorrichtung über eine kabellose Verbindung miteinander verbunden. Die kabellose Verbindung vereinfacht die Montage und die Bedienung, wenn sie aus der Ferne erfolgen soll, wie beispielsweise aus der Kabine des Zugfahrzeugs oder wenn ein Benutzer neben dem Kreiselzettwender steht. Um kabellos Stellbefehle empfangen zu können, sind die Antriebsmotoren mit einem Kommunikationsmodul verbunden. Das Kommunikationsmodul kann auf eine bidirektionale Kommunikation ausgelegt sein.

Nach einer Ausgestaltung der Erfindung ist die Betätigungsvorrichtung als eine App in einem elektronischen Endgerät für mobile, netzunabhängige Daten-, Sprach- und Bildkommunikation ausgestaltet. Eine App ist eine Anwendungssoftware, die auf dem elektronischen Endgerät gespeichert wird. Die Anwendungssoftware ermöglicht eine kabellose Kommunikation zwischen dem elektronischen Endgerät und dem Kreiselzettwender. Über die App können Betriebszustände des Kreiselzettwenders angezeigt und gesteuert werden. Das elektronische Endgerät wie beispielsweise ein Smartphone bildet die Hardware für die Betätigungsvorrichtung, die dann nicht separat angeschafft und installiert werden muss.

Nach einer Ausgestaltung der Erfindung sind die Antriebsmotoren in einer Ebene unterhalb des zugehörigen Kreiselrechens angeordnet. In dieser Ebene befinden sich die Antriebsmotoren in unmittelbarer Nähe zu den Stützrädern und können Stellkräfte direkt auf die Haltearme übertragen.

Nach einer Ausgestaltung der Erfindung sind die Antriebsmotoren als elektrische Motoren ausgebildet. Die elektrischen Motoren können trotz kompakter Abmessungen ausreichend große Stellkräfte erzeugen. Die Energieversorgung von elektrischen Motoren ist vergleichsweise einfach darstellbar. Entweder wird der Strom, der für den Antrieb der elektrischen Motoren erforderlich ist, über Steckdosen am Zugfahrzeug bereitgestellt und von dort über Kabel bis zu den elektrischen Motoren verteilt, oder der Kreiselzettwender ist mit einem eigenen Stromerzeuger oder einem oder mehreren Stromspeichern ausgestattet, von denen aus der Strom zu den elektrischen Motoren geleitet wird.

Nach einer Ausgestaltung der Erfindung werden die elektrischen Motoren jeweils aus einer Stromquelle mit Energie versorgt, die in einer Ebene unterhalb des zugehörigen Kreiselrechens angeordnet ist. Als Stromquelle kommen beispielsweise Akkumulatoren, Batterien oder Dynamos in Betracht. Diese Stromquellen können darauf ausgelegt sein, so viel elektrische Energie bereitzustellen, wie sie benötigt wird, um einen zugehörigen Antriebsmotor während eines Arbeitstages mehrfach verstellen zu können. Durch die Anordnung in einer Ebene unterhalb des zugehörigen Kreiselrechens entfällt die Notwendigkeit, die elektrische Energie von einer anderen Position am Kreiselzettwender aus durch die Rotationsachse des Kreiselrechens hindurch zu einem elektrischen Motor zu leiten. Die Verkabelung zwischen der Stromquelle und dem zugehörigen elektrischen Motor kann also kurz, montagefreundlich und kostengünstig sein. In der Ebene unterhalb des zugehörigen Kreiselrechens ist eine Stromquelle auch gut gegen eventuelle Kollisionen mit Hindernissen geschützt, da in dem Bereich unterhalb des zugehörigen Kreiselrechens auch das Tastrad angeordnet ist, das im Arbeitsbetrieb des Kreiselzettwenders über den Boden abrollt und dadurch auch bei unebenen Bodenverhältnissen sicherstellt, dass Hindernisse im Normalfall überrollt werden.

Nach einer Ausgestaltung der Erfindung sind die elektrischen Motoren ein Bestandteil eines elektrischen Linearantriebs. Bei einem elektrischen Linearantrieb wird eine Drehbewegung des Elektromotors in eine lineare Bewegung eines Antriebselements umgewandelt. Der wichtigste Vorteil von Elektrozylindern liegt in der elektronischen Kommunikation: Sie können von einem elektronischen System angesteuert werden und liefern an dieses Informationen zurück. So kann der Elektromotor beispielsweise eine Hubstange bewegen, die sich je nach Drehrichtung des elektrischen Motors vor- und zurückschiebt. Elektrische Linearantriebe ermöglichen präzise und kontrollierte lineare Bewegungen. Fahrbewegungen werden punktgenau und mit wiederholbarer Präzision ausgeführt. Mit einer integrierten digitalen Steuerung kann die Bewegung und Beschleunigung des elektrischen Linearantriebs individuell eingestellt werden. Ein elektrischer Linearantrieb kann seine exakte Position an die zugehörige Steuerung zurückmelden. Elektrische Linearantriebe arbeiten nicht mit Öl und kennen auch keine lästigen Leckagen, welche die Maschine verschmutzen. Die Bewegungsumwandlung erfolgt üblicherweise über ein Getriebe. Je nach Übersetzungsverhältnis des Getriebes wird die Hubstange mit mehr Kraft, dafür langsamer oder mit weniger Kraft, dafür schneller bewegt.

Nach einer Ausgestaltung der Erfindung ist als elektrischer Linearantrieb ein Spindelantrieb verwendet. Die translatorische Bewegung des bewegten Körpers wird dabei von einer rotierenden Gewindespindel erzeugt und auf die Spindelmutter übertragen. Durch die direkte Umwandlung der rotierenden Bewegung von der Spindel in eine lineare Bewegung wird eine sehr genaue und wiederholbare Positionierung erreicht. Wegen der kompakten Bauweise von Spindeltrieben sind diese insbesondere für die Verwendung in kleineren Bauräumen geeignet. Spindelantriebe in Linearantrieben sind in der Lage, vergleichsweise hohe Lasten zu tragen und zu bewegen. Die konstante, präzise Bewegung des Spindelantriebes ist reibungsarm, der Verschleiß an den Bauteilen ist dadurch gering.

Nach einer Ausgestaltung der Erfindung ist als Antriebsmotor ein Schneckengetriebemotor in Verbindung mit einem Schneckengetriebe verwendet. Ein Schneckengetriebe ist eine Kombination aus einem Schraubgetriebe und einem Zahnradgetriebe und besteht aus einer schraubenförmigen Schneckenwelle und einem Zahnrad. Im Gegensatz zu einem Zahnradgetriebe mit teilweise nur wälzendem Kontakt berühren sich die Schneckenwindungen der Schneckenwelle und die Zahnflanken des Zahnrads permanent gleitend. Ein Schneckengetriebe ist im Umkehrbetrieb - außer bei sehr steilem Verzahnungswinkel - selbsthemmend, es findet also keine Drehübertragung vom Schneckenrad zur Schneckenwelle statt. Das ist vorteilhaft, wenn das angetriebene Element keine Eigenbewegungen auf den Antrieb übertragen soll, wie im vorliegenden Fall, wenn der Haltearm vom Antriebsmotor in einer Stellposition gehalten werden soll. Schneckengetriebemotoren können ein höheres Drehmoment erzeugen als beispielsweise Stirnradmotoren. Ein Schneckengetriebe ermöglicht außerdem eine 90°-Umlenkung der Drehbewegung, wodurch es einfacher ist, die Antriebsbaugruppe in dem verfügbaren Bauraum unterzubringen.

Nach einer Ausgestaltung der Erfindung sind das Kommunikationsmodul, die Stromquelle für den elektrischen Motor und die Steuerung für den elektrischen Motor einer Streuwinkelverstellvorrichtung in einem gemeinsamen Gehäuse angeordnet. Bei der Anordnung in einem gemeinsamen Gehäuse können die entsprechenden Komponenten bei der Montage des Kreiselzettwenders vormontiert bereitgehalten und einfach angebaut werden. Das gemeinsame Gehäuse schützt alle Komponenten gegen Staub, Schmutz, Feuchtigkeit und Fremdkörper. Im Reparaturfall sind nach der Öffnung des Gehäuses alle für die Streuwinkelverstellung wesentlichen Komponenten direkt zugänglich.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung mit dem Gegenstand des Anspruchs 1 verwendbar, soweit dem keine technischen Hindernisse entgegenstehen.

Die Erfindung wird nun anhand eines bevorzugten Ausführungsbeispiels sowie unter Bezugnahme auf die beigefügten Zeichnungen näher erläutert.

Es zeigen:
- Fig. 1:: eine perspektivische Ansicht auf einen an einen Schlepper angebauten Kreiselzettwender,
- Fig. 2:: eine schematische Seitenansicht auf einen an einen Schlepper angebauten Kreiselzettwender,
- Fig. 3:: eine der Fig. 2 entsprechende Seitenansicht, mit einem auf einen kleineren Streuwinkel eingestellten Kreiselzettwender,
- Fig. 4:: eine Ansicht auf einen Kreiselrechen mit einer Streuwinkelverstellvorrichtung,
- Fig. 5:: eine alternative Ausführungsform eines Kreiselzettwenders als gezogene Maschine.

Bei den Darstellungen handelt es sich im Wesentlichen um konkrete Ausführungsbeispiele. Die Erfindung ist hingegen nicht auf die dargestellten Ausführungsbeispiele beschränkt, sondern kann in fachmännischer Weise abgewandelt werden, um sie an einen bestimmten Anwendungsfall anzupassen.

Soweit dienlich sind in allen Figuren einander entsprechende Bauteile mit identischen Bezugsziffern bezeichnet. Aus Gründen der Übersichtlichkeit sind bei mehrfach auftretenden Bauteilen jedoch nicht stets alle mit Bezugsziffern versehen.

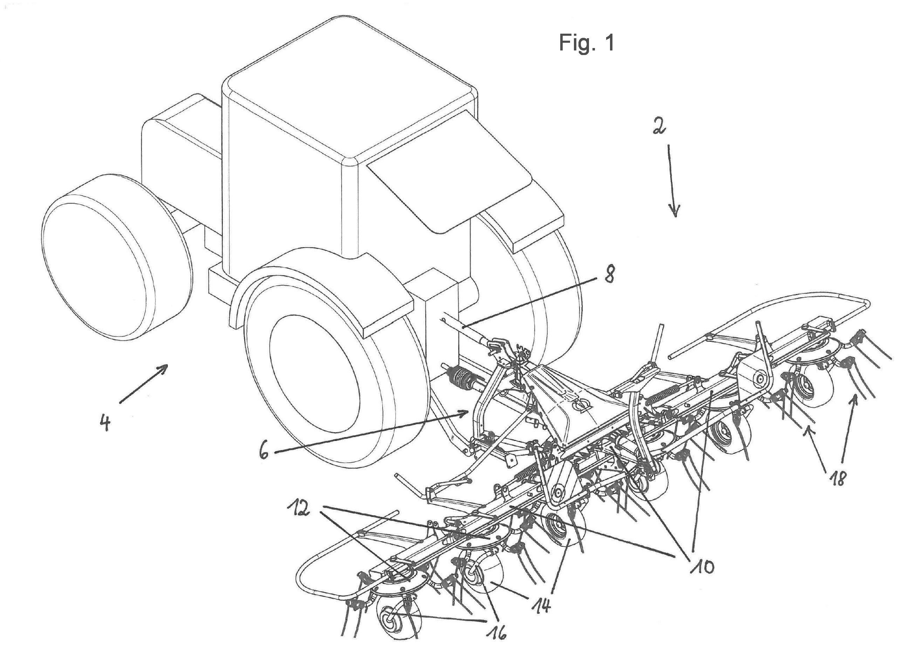

Die Fig. 1 zeigt einen Kreiselzettwender 2, der an ein Zugfahrzeug 4 angebaut ist. Bei dem Zugfahrzeug 4 handelt es sich im Ausführungsbeispiel um einen Schlepper. Das Zugfahrzeug 4 hat an seinem Fahrzeugheck eine Dreipunktaufhängung 6 mit einem Oberlenker 8. Der Maschinenrahmen 10 des Kreiselzettwenders 2 ist an die Dreipunktaufhängung 6 angebaut.

Im gezeigten Ausführungsbeispiel sind an den Maschinenrahmen 10 insgesamt sechs Kreiselrechen 12 angebaut. Jeder Kreiselrechen 12 ist über ein Tastrad 14 am Boden abgestützt. Jedes Tastrad 14 ist an einem Haltearm 16 gehalten. Der Kreiselzettwender 2 ist im Arbeitsbetrieb auf eine Arbeitshöhe WH eingestellt, bei der die Zinken 18 bei einer Rotationsbewegung der Kreiselrechen 12 mit ihren äußeren Spitzen etwa an ihrem vorderen, dem Zugfahrzeug 4 zugewandten Totpunkt mit einem geringen Abstand zum Boden ihren tiefsten Punkt erreichen. Dabei erfassen sie das auf dem Boden liegende Erntegut, nehmen es mit, beschleunigen es und werfen es nach hinten in eine Richtung entgegen der Fahrtrichtung des Zugfahrzeugs 4.

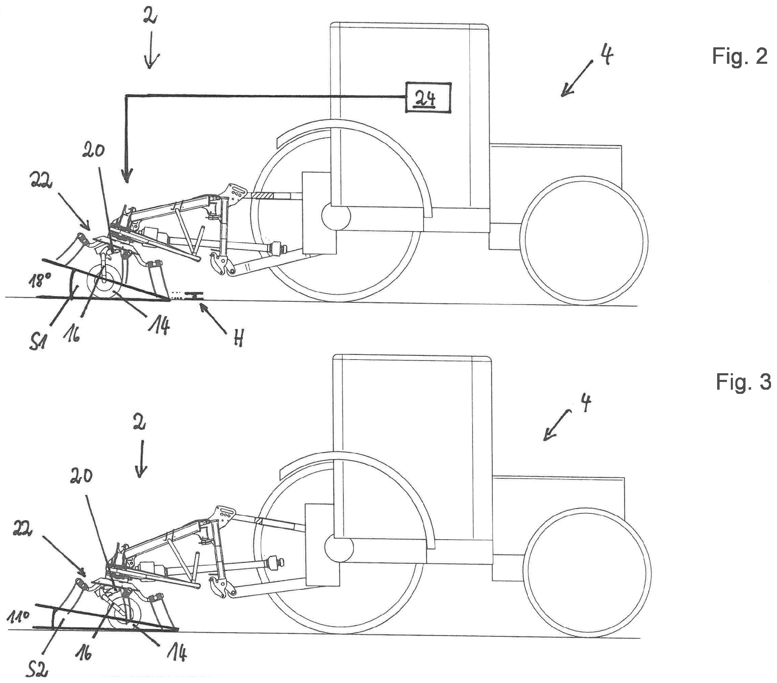

Die Fig. 2 zeigt eine schematische Seitenansicht auf einen an ein Zugfahrzeug 4 angebauten Kreiselzettwender 2. In der Seitenansicht ist der Lagerbock 20 gut erkennbar, an dem der Haltearm 16 eines Tastrads 14 gelagert ist. Die Fig. 3 zeigt eine der Fig. 2 entsprechende Seitenansicht. Bei einem Vergleich der Seitenansichten in den Fig. 2 und 3 ist der unterschiedliche Streuwinkel S erkennbar, auf den der Kreiselrechen 12 eingestellt ist. Während der Streuwinkel S1 in der Darstellung in Fig. 2 etwa 18° beträgt, hat der Streuwinkel S2 in Fig. 3 etwa 11°. Die unterschiedlichen Streuwinkel S1, S2 sind mit der Streuwinkelverstellvorrichtung 22 einstellbar. Die Verstellung des Streuwinkels kann mit der Streuwinkelverstellvorrichtung 22 je nach Auslegung in Stufen oder stufenlos erfolgen.

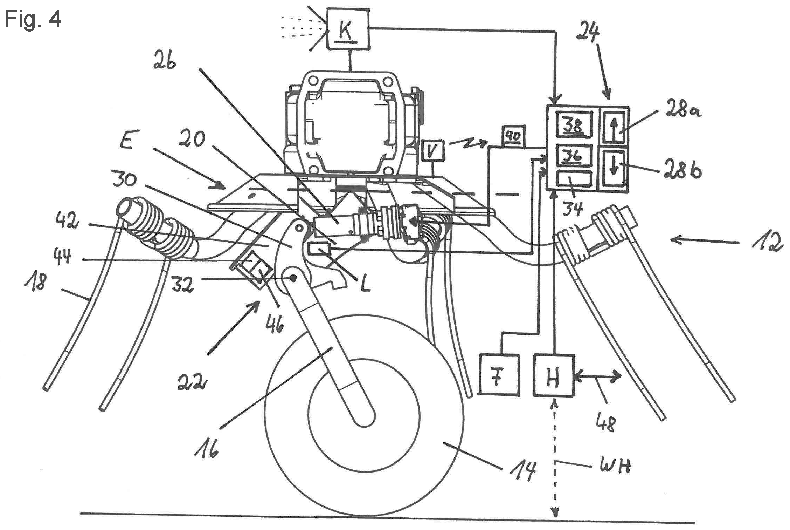

Die Fig. 4 zeigt eine Ansicht auf einen Kreiselrechen 12, der mit einem Tastrad 14 auf dem Boden abgestützt ist. Das Tastrad 14 ist mit einer Streuwinkelverstellvorrichtung 22 verbunden. Das Tastrad 14 ist am Haltearm 16 befestigt. Der Haltearm 16 ist wiederum über die Drehachse 32 mit dem Lagerbock 20 verbunden. Die Streuwinkelverstellvorrichtung 22 weist im gezeigten Ausführungsbeispiel einen Antriebsmotor 26, einen Stellhebel 30, den im Lagerbock 20 gelagerten Haltearm 16 und die Drehachse 32 auf. Der Kreiselrechen rotiert in einer Ebene E. Der Antriebsmotor 26 der Streuwinkelverstellvorrichtung 22 ist in einer Ebene unterhalb des zugehörigen Kreiselrechens 12 angeordnet. Als Antriebsmotor 26 können im Ausführungsbeispiel Elektromotoren verwendet sein. Der Elektromotor 26 wird aus einer Stromquelle 42 versorgt, die ebenfalls in einer Ebene unterhalb des zugehörigen Kreiselrechens 12 angeordnet ist. Die Streuwinkelverstellvorrichtung 22 wird mit der Betätigungsvorrichtung 24 betätigt. Im gezeigten Ausführungsbeispiel verfügt die Betätigungsvorrichtung 24 über eine erste Taste 28a, bei deren Betätigung die Streuwinkelverstellvorrichtungsposition so verstellt wird, dass der Streuwinkel S vergrößert wird, und eine zweite Taste 28b, bei deren Betätigung die Streuwinkelverstellvorrichtungsposition so verstellt wird, dass der Streuwinkel S verkleinert wird. Bei einer Betätigung der Betätigungsvorrichtung 24 wird ein entsprechendes Stellsignal an den Antriebsmotor 26 übermittelt. Der Antriebsmotor 26 führt bei einer Betätigung der Betätigungsvorrichtung 24 eine Verstellbewegung aus, die auf einen Stellhebel 30 wirkt, mit dem der Haltearm 16 um die Drehachse 32 gedreht wird, mit der der Haltearm 16 im Lagerbock 20 gelagert ist. Je nach Drehstellung des Haltearms 16 im Lagerbock 20 ergibt sich ein größerer oder kleinerer Streuwinkel S. Der Verstellweg, innerhalb dessen sich der Antriebsmotor 26 bewegt, kann durch physische Anschläge in der Streuwinkelverstellvorrichtung 22 und oder im Antriebsmotor 26 begrenzt sein.

In Fig. 4 ist beispielhaft nur ein einziger Antriebsmotor 26 einer Streuwinkelverstellvorrichtung 22 eines einzigen Kreiselrechens 12 gezeigt. Bei mehreren Kreiselrechen 12 eines Kreiselzettwenders 2 ist die Betätigungsvorrichtung 24 mit allen entsprechenden Antriebsmotoren 26 verbunden, die in den Streuwinkelverstellvorrichtungen 22 der anderen Kreiselrechen 12 vorhanden sind.

Dadurch ist es möglich, über die Betätigungsvorrichtung 24 alle Antriebsmotoren 26 anzusteuern, wobei dies gleichzeitig, nacheinander oder in Gruppen erfolgen kann. Im Ergebnis werden dadurch nach einer Betätigung der Betätigungsvorrichtung 24 gemeinsam betätigt, und der Kreiselzettwender 2 wird dadurch insgesamt mit der einen Betätigung auf einen neuen Streuwinkel S eingestellt.

Aus der Ansicht in Fig. 4 ist erkennbar, dass der Antriebsmotor 26 den ihm zugeordneten Haltearm 16 nach seiner Abschaltung im jeweils eingestellten Streuwinkel S festlegt. Wenn der Streuwinkel S verändert werden soll, muss der Antriebsmotor 26 seine Länge verändern, um den Stellhebel 30 und damit auch den Haltearm 16 in eine andere räumliche Lage zu verschwenken. Da der Antriebsmotor 26 durch seine dauerhafte Verbindung mit dem Haltearm 16 auch Stößen ausgesetzt ist, die durch die Fahrbewegung des Kreiselzettwenders 2 auf dem Acker entstehen, müssen entsprechenden Bauteile und die Verbindungen der Bauteile miteinander ausreichend belastbar ausgestaltet sein.

Eine Komponente der Betätigungsvorrichtung 24 kann eine Verstellautomatik 34 sein. Die Verstellautomatik 34 führt mittels einer programmierten Software auf Basis einer Bedieneingabe und/oder einer Auswertung von Sensorsignalen eine automatisierte Verstellung des Streuwinkels S durch die Übermittlung von Stellsignalen 40 an die Antriebsmotoren 26 der Streuwinkelverstellvorrichtungen 22 aus. Die Auswertung der Sensorsignale kann durch eine Auswertesoftware 36 erfolgen, die ebenfalls ein Bestandteil der Betätigungsvorrichtung 24 sein kann. Als Sensorsignale kommen beispielsweise die Sensorsignale eines Feuchtesensors F, eines Arbeitshöhensensors H, einer Kamera K und/oder eines Lagesensors L in Betracht. Die jeweiligen Sensoren sind an einer geeigneten Stelle des Kreiselzettwenders 2 positioniert. Der Feuchtesensor F kann die Feuchte des Ernteguts messen, der Arbeitshöhensensor H misst den Bodenabstand, den die Zinken 18 beim Betrieb des Kreiselzettwenders 2 einhalten, die Kamera K filmt das Wurfbild des Kreiselzettwenders 2, um es auf der Anzeigevorrichtung 38 anzuzeigen und/oder die Kamerabilder mit einer elektronischen automatisierten Bildauswertung zu analysieren und daraus Möglichkeiten für eine Verbesserung des Arbeitsergebnisses des Kreiselzettwenders 2 abzuleiten, und der Lagesensor L misst genau, in welcher Schwenklage sich der Haltearm 16 und/oder der Stellhebel 30 befinden. Ein Vibrationssensor V kann Vibrationen messen, die auftreten, wenn die Zinken 18 einen Bodenkontakt haben, und ein entsprechendes Bodenkontaktsignal generieren. Das Bodenkontaktsignal des Vibrationssensors V kann beispielsweise über Funk an die Auswertesoftware 36 übertragen werden. Der Arbeitshöhensensor H kann eine Schnittstelle 48 zum Zugfahrzeug 4 aufweisen, über die der Arbeitshöhensensor H Sensordaten an das Zugfahrzeug 4 übermittelt oder von dort Daten erhält, die in den von ihm generierten Sensorwert einfließen. Die vom Zugfahrzeug 4 erhaltenen Daten können beispielsweise die Höhe repräsentieren, auf die die Dreipunktaufhängung 6 oder der Oberlenker 8 eingestellt sind, und/oder ob eine erste Einstellung oder eine Verstellung der Höheneinstellung der Dreipunktaufhängung 6 oder des Oberlenkers 8 erfolgt ist, und/oder ob die Zapfwelle des Zugfahrzeugs 4 rotiert. Die Sensoren können über eine Kabelverbindung oder kabellos mit der Auswertesoftware 36 verbunden sein.

Eine Komponente der Betätigungsverrichtung 24 kann eine Anzeigevorrichtung 38 sein. Die Anzeigevorrichtung 38 kann insbesondere als ein Display ausgestaltet sein, dass die entsprechenden Sensorwerte in numerischer und/oder grafischer Form und/oder Softkeys für Bedieneingaben der Betätigungsvorrichtung 24 anzeigt. Die Betätigungsvorrichtung 24 kann ein Bedienteil sein, das direkt am Kreiselzettwender 2 angebracht ist, das sich in der Kabine des Zugfahrzeugs 4 befindet, es kann sich um ein Display in der Kabine des Zugfahrzeugs handeln, das dort für die Steuerung und Bedienung von Anbaugeräten vorhanden ist, oder das als eine App auf einem tragbaren Bedienteil, Handy, oder Tablet abläuft, das ein Benutzer mit sich führt. Der in Fig. 4 gezeigte Antriebsmotor 26 kann als ein elektrischer Motor ausgebildet sein. Um den elektrischen Antriebsmotor 26 betreiben zu können, ist eine Versorgung mit elektrischem Strom erforderlich. Im Ausführungsbeispiel ist dazu die Stromquelle 42 vorhanden, über die die elektrische Energie zur Verfügung gestellt wird, die die Streuwinkelverstellvorrichtung 22 beim Betrieb des Kreiselzettwenders 5 benötigt. Da die Einstellungen und Verstellungen des Streuwinkels S nicht kontinuierlich, sondern immer nur kurzzeitig punktuell vorgenommen werden, ist die sinnvolle Energiemenge, die in der Stromquelle 42 bevorratet sein sollte, nicht allzu groß. Die Stromquelle 42 kann als Akkumulator oder Dynamo ausgebildet sein, um die benötigte Energiemenge zur Verfügung zu stellen. Sowohl ein ausreichend großer Akkumulator als auch ein Dynamo, der eine ausreichende elektrische Leistung zur Verfügung stellt, können entsprechend kompakt ausgebildet sein, sodass sie noch unterhalb der Ebene E, in der die Haltearme des Kreiselrechens 12 rotieren, angeordnet werden können. Wenn als Stromquelle 42 Akkumulatoren verwendet werden, können diese für Ladezwecke leicht entnommen und wieder eingebaut werden. Der Kreiselzettwender 2 behält dadurch seine kompakten Abmessungen, und die Stromquelle 42 ist unter dem Kreiselrechen 12 gut gegen äußere Beschädigungen geschützt. Auch bleibt der Maschinenschwerpunkt niedrig und nah am Boden. Wenn die Stromquelle 42 in einer Ebene unterhalb der Rotationsebene des Kreiselrechens 12 angeordnet ist, kann darauf verzichtet werden, entsprechende Zuleitungen durch die Rotationsachse des Kreiselrechens 12 hindurchzuführen, was einen erheblichen Kosten- und Montageaufwand verursachen würde.

Das Gehäuse, in dem die Stromquelle 42 angeordnet ist, kann auch dazu genutzt werden, ein Kommunikationsmodul 44 und eine Steuerung 46 unterzubringen. Die Steuerung 26 kann dazu genutzt werden, den Antriebsmotor 26 zu steuern. In der Steuerung 26 können auch die Auswertungssoftware 36 und/oder die Verstellautomatik 34 gespeichert sein. Das Kommunikationsmodul 44 kann als Schnittstelle für einen kabellosen Datenaustausch mit dem Zugfahrzeug 4, der Betätigungsvorrichtung 24 und/oder einer Anzeigevorrichtung 38 genutzt werden.

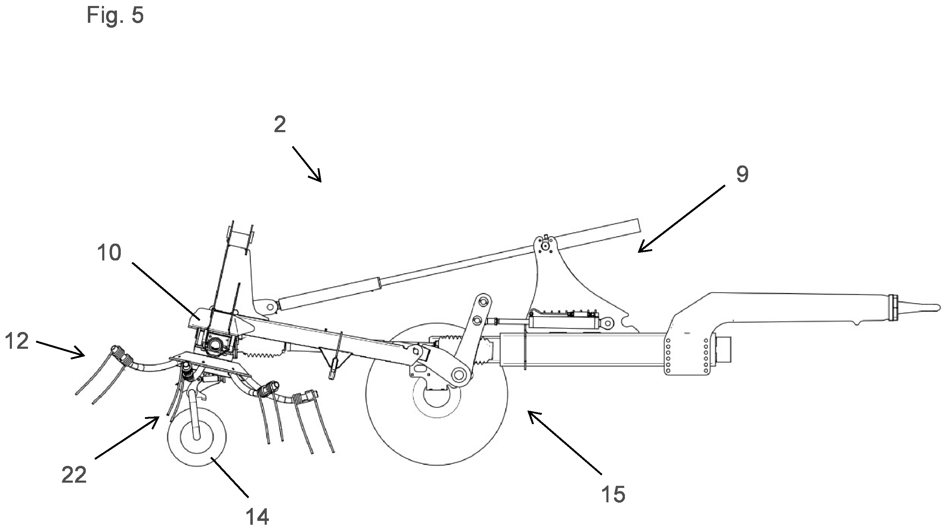

Fig. 5 zeigt beispielhaft einen erfindungsgemäßen gezogenen Kreiselzettwender 2. Der gezogene Kreiselzettwender 2 weist ein Transportfahrwerk 15 mit wenigstens einem, insbesondere gelenkten Rad auf. Zur Höheneinstellung weist der Kreiselzettwender 2 einen Höhenverstellmechanismus 9 auf, welcher im dargestellten Beispiel in ähnlicher Art zur Dreipunktaufhängung ausgestaltet ist.

## Patentansprüche

1. Verfahren zur Einstellung der Streuwinkel (S) von mehreren an einem Maschinenrahmen (10) gehaltenen umlaufend angetriebenen Kreiselrechen (12) eines Kreiselzettwenders (2), die jeweils über zumindest ein Tastrad (14) auf dem Boden abgestützt sind, jedes Tastrad (14) an einem diesem Tastrad (14) zugeordneten Haltearm (16) befestigt ist, der höhen- und/oder schwenkbeweglich mit einem jedem Kreiselrechen (12) zugeordneten Lagerbock (20) verbunden ist, wobei jeder Haltearm (16) mittels einer dem Haltearm (16) zugeordneten Streuwinkelverstellvorrichtung (22) in einer Höhen- und/oder Winkellage zum Lagerbock (20) gehalten ist, **dadurch gekennzeichnet, dass** die Streuwinkeleinstellung durch die Betätigung von Antriebsmotoren (26) erfolgt, die jeweils ein Bestandteil einer jeweiligen Streuwinkelverstellvorrichtung (22) sind, und die Antriebsmotoren (26) der Streuwinkelverstellvorrichtungen (22) mittels einer Betätigungsvorrichtung (24) gemeinsam betätigt werden.

2. Verfahren nach Anspruch 1, **dadurch gekennzeichnet, dass** eine Einstellung oder Verstellung der Arbeitshöhe (WH) des Kreiselzettwenders (2) und/oder der Kreiselrechen (12) mit einer Betätigung der Antriebsmotoren (26) der Streuwinkelverstellvorrichtungen (22), insbesondere durch ein technisches Zwangsmittel, verbunden ist, und/oder eine Betätigung der Betätigungsvorrichtung (24) der Streuwinkeleinstellung mit einer Einstellung oder Verstellung der Arbeitshöhe (WH) des Kreiselzettwenders (2) verbunden ist.

3. Verfahren nach einem der Ansprüche 1 oder 2, dadurch gekenzeichnet, dass die Betätigungsvorrichtung (24) eine Verstellautomatik (34) aufweist, die mittels einer programmierten Software auf Basis einer Bedieneingabe und/oder einer Auswertung von Sensorsignalen eine automatisierte Verstellung des Streuwinkels (S) durch die Übermittlung von Stellsignalen (40) an die Antriebsmotoren (26) der Streuwinkelverstellvorrichtungen (22) ausführt.

4. Verfahren nach einem der vorhergehenden Ansprüche, **dadurch gekennzeichnet, dass** zumindest eine der Streuwinkelverstellvorrichtungen (22) einen Lagesensor (L) aufweist, der ein Sensorsignal generiert, das repräsentativ ist für eine aktuelle Streuwinkelverstellvorrichtungsposition und/oder den aktuell eingestellten Streuwinkel (S), und/oder der Kreiselzettwender (2) und/oder das Zugfahrzeug (4) zumindest einen Feuchtesensor (F) aufweist, der die Feuchte des aktuell bearbeiteten Ernteguts ermittelt und ein Sensorsignal generiert, das repräsentativ ist für die Feuchte des aktuell bearbeiteten Ernteguts, und/oder der Kreiselzettwender (2) und/oder das Zugfahrzeug (4) zumindest einen optischen Sensor (K) aufweist, der ein Bildsignal vom Wurfbild des bearbeiteten Ernteguts generiert, und das vom Lagesensor (L) generierte Sensorsignal, und/oder das vom Feuchtesensor (F) generierte Sensorsignal und/oder das vom optischen Sensor (K) generierte Bildsignal an eine Anzeigevorrichtung (38) übermittelt wird, die die aktuell eingestellte Streuwinkelverstellvorrichtungsposition und/oder den aktuell eingestellten Streuwinkel (S) auf Basis des übermittelten Sensorwertes und/oder die Feuchte des aktuell bearbeiteten Ernteguts auf Basis des übermittelten Sensorwertes und/oder das aktuelle Wurfbild des bearbeiteten Ernteguts auf Basis des übermittelten Bildsignals anzeigt.

5. Verfahren nach einem der vorhergehenden Ansprüche 1 bis 3, **dadurch gekennzeichnet, dass** zumindest eine der Streuwinkelverstellvorrichtungen (22) einen Lagesensor (L) aufweist, der ein Sensorsignal generiert, das repräsentativ ist für eine aktuelle Streuwinkelverstellvorrichtungsposition und/oder den aktuell eingestellten Streuwinkel (S), und/oder der Kreiselzettwender (2) und/oder das Zugfahrzeug (4) zumindest einen Feuchtesensor (F) aufweist, der die Feuchte des aktuell bearbeiteten Ernteguts ermittelt und ein Sensorsignal generiert, das repräsentativ ist für die Feuchte des aktuell bearbeiteten Ernteguts, und/oder der Kreiselzettwender (2) und/oder das Zugfahrzeug (4) zumindest einen optischen Sensor (K) aufweist, der ein Bildsignal vom Wurfbild des bearbeiteten Ernteguts generiert, und das vom Lagesensor (L) generierte Sensorsignal, und/oder das vom Feuchtesensor (F) generierte Sensorsignal und/oder das vom optischen Sensor (K) generierte Bildsignal an eine Auswertesoftware (36) übermittelt werden, die anhand einer Programmierung einen Sollwert für die Einstellung der Streuwinkelverstellvorrichtungsposition und/oder der Streuwinkel (S) der Kreiselrechen (12) generiert.

6. Verfahren nach einem der Ansprüche 4 oder 5 unter Einbeziehung des Anspruchs 3, **dadurch gekennzeichnet, dass** der von der Auswertesoftware (36) ermittelte Sollwert für die Einstellung der Streuwinkelverstellvorrichtungsposition und/oder der Streuwinkel (S) der Kreiselrechen (12) der Verstellautomatik (34) und/oder der Anzeigevorrichtung (38) übermittelt wird.

7. Verfahren nach Anspruch 5 oder 6, **dadurch gekennzeichnet, dass** der Kreiselzettwender (2) und/oder das Zugfahrzeug (4) einen Arbeitshöhensensor (H) aufweist, der ein Sensorsignal generiert, das repräsentativ ist für die Höheneinstellung der Kreiselrechen (12), der Arbeitshöhensensor (H) das Sensorsignal an die Auswertesoftware (36) übermittelt, und die Auswertesoftware (36) anhand einer Programmierung das die Höheneinstellung repräsentierende Sensorsignal in die Berechnung des Sollwerts für die Einstellung der Streuwinkelverstellvorrichtungsposition und/oder der Streuwinkel (S) der Kreiselrechen (12) einbezieht.

8. Verfahren nach einem der vorhergehenden Ansprüche 2 bis 7, **dadurch gekennzeichnet, dass** die Verstellautomatik (34) anhand einer Programmierung bei Eingang eines Bodenkontaktsignals ein Stellsignal (40) zur Anhebung der Höheneinstellung (WH) der Kreiselrechen (12) auf einen neuen Höheneinstellwert und in Abhängigkeit von dem neuen Höheneinstellwert einen dazu passenden Wert für die Einstellung der Streuwinkelverstellvorrichtungsposition der Kreiselrechen (12) generiert, diesen Wert für die Einstellung der Streuwinkelverstellvorrichtungsposition der Kreiselrechen (12) mit der aktuellen Einstellung der Streuwinkelverstellvorrichtungsposition der Kreiselrechen (12) vergleicht und bei einer Abweichung des neuen Wertes von den aktuell eingestellten Streuwinkelverstellvorrichtungsposition eine automatisierte Verstellung der Streuwinkelverstellvorrichtungsposition durch die Übermittlung von Stellsignalen (40) an die Antriebsmotoren (26) der Streuwinkelverstellvorrichtungen (22) ausführt.

9. Kreiselzettwender (2), insbesondere zur Ausführung eines Verfahrens nach einem der Ansprüche 1 bis 8, mit einem Maschinenrahmen (10), mehreren am Maschinenrahmen (10) gehaltenen umlaufend angetriebenen Kreiselrechen (12), die jeweils über zumindest ein Tastrad (14) auf dem Boden abgestützt sind, und jedes Tastrad (14) ist an einem diesem Tastrad (14) zugeordneten Haltearm (16) befestigt, der höhen- und/oder schwenkbeweglich mit einem jedem Kreiselrechen (12) zugeordneten Lagerbock (20) verbunden ist, wobei jeder Haltearm (16) mittels einer dem Haltearm (16) zugeordneten Streuwinkelverstellvorrichtung (22) in einer Höhen- und/oder Winkellage zum Lagerbock (20) gehalten ist, **dadurch gekennzeichnet, dass** jede Streuwinkelverstellvorrichtung (22) einen Antriebsmotor (26) aufweist, der mit einer Betätigungsvorrichtung (24) verbunden ist, und die Betätigungsvorrichtung (24) bei einer Betätigung ein Stellsignal (40) an alle Antriebsmotoren (26) generiert.

10. Kreiselzettwender (2) nach Anspruch 9, **dadurch gekennzeichnet, dass** die Antriebsmotoren (26) mit der Betätigungsvorrichtung (24) über eine kabellose Verbindung miteinander verbunden sind.

11. Kreiselzettwender (2) nach Anspruch 9 oder 10, **dadurch gekennzeichnet, dass** die Betätigungsvorrichtung (24) als eine App in einem elektronischen Endgerät für mobile, netzunabhängige Daten-, Sprach- und Bildkommunikation ausgestaltet ist.

12. Kreiselzettwender (2) nach einem der vorhergehenden Ansprüche 9 bis 11, **dadurch gekennzeichnet, dass** die Antriebsmotoren (26) in einer Ebene unterhalb des zugehörigen Kreiselrechens (12) angeordnet sind.

13. Kreiselzettwender (2) nach einem der vorhergehenden Ansprüche 9 bis 12, **dadurch gekennzeichnet, dass** die Antriebsmotoren (26) als elektrische Motoren ausgebildet sind.

14. Kreiselzettwender (2) nach Anspruch 13, **dadurch gekennzeichnet, dass** die elektrischen Motoren jeweils aus einer Stromquelle (42) mit Energie versorgt werden, die in einer Ebene unterhalb des zugehörigen Kreiselrechens (12) angeordnet ist.

15. Kreiselzettwender (2) nach Anspruch 13 oder 14, **dadurch gekennzeichnet, dass** die elektrischen Motoren ein Bestandteil eines elektrischen Linearantriebs sind.
